# EUROPÄISCHE PATENTANMELDUNG

(11) **EP 4 810 271 A1**
(43) Veröffentlichungstag der Anmeldung: **23.09.2026**
(21) Anmeldenummer: 25192789.3
(22) Anmeldetag: 30.07.2025
(51) Int. Cl.: B60D 1/62, B60H 1/00, B60H 1/32, B60P 3/20, B60R 16/033, B62D 53/00, H02J 7/14

(54) **SCHALTUNGSANORDNUNG ZWISCHEN EINEM KÜHL-KOFFER-AUFLIEGER UND DER DAZUGEHÖRIGEN ZUGMASCHINE**

(30) Priorität: 18.03.2025 DE 102025110361
(71) Anmelder: Knothe, Kathrin, 03055 Cottbus (DE)
(72) Erfinder: Gucz, Alexander, 03055 Cottbus (DE)
(74) Vertreter: Haschick, Gerald

(57) **Zusammenfassung**

Schaltungsanordnung zwischen einem Kühl-Koffer-Auflieger und der dazugehörigen Zugmaschine zum Laden der Batterien der Zugmaschine, wobei ein Lade-Charger mit einer Vorrangschaltung an eine Batterie des Kühlaggregates des Kühl-Koffer-Aufliegers angeschlossen ist und ein Nato-Strom-Versorgungskabel mit 12 V vom Lade-Charger hin zur Starthilfebox der Zugmaschine mit einer Vorrangschaltung verbunden ist.

## Beschreibung

Die Erfindung betrifft eine Schaltungsanordnung zwischen einem an sich bekannten Kühl-Koffer-Auflieger und der dazugehörigen Zugmaschine.

Aus dem nachfolgenden Kommentar wird der Stand der Technik bzw. der gegebene Sachverhalt erläutert.

Grundsätzlich ist der Zustand gegeben, dass ein Kühl-Koffer-Auflieger von der dazugehörigen Zugmaschine über weite Strecken befördert wird.

Diesbezüglich ist es notwendig, dass entsprechende Pausen der Fahrer eingehalten werden.

Dabei werden sämtliche temperaturabhängige Waren, welche aufgrund ihrer Art, Beschaffenheit und Transportfähigkeit im Sommer gekühlt und im Winter geheizt werden müssen, transportiert.

Dazu zählen nicht nur Lebensmittel, sondern auch Medizin, hochwertige Möbel, Chemikalien, Lacke und so weiter.

Die gegebenen Zugmaschinen müssen während der Fahrt den Stromverbrauch nicht nur für Kühlschränke, Standheizung, Stromwandler, Mikrowelle etc. produzieren, sondern auch für allerhand elektronische Assistenzsysteme, die ein Fahrer im Fernverkehr benötigt, und gleichzeitig noch die Fahrzeugbatterie auf 100 % laden.

Die technischen Assistenzsysteme überwachen sich gegenseitig auch im Stand, wenn der Fahrer im Fernverkehr seine Pause in der Zugmaschine verbringt und dabei den Motor ausgeschaltet hat.

Das Problem der an sich bekannten Lösung, wie sie vorgehend beschrieben wurde, liegt darin, dass durch die CO2-Vorgaben im Flottenverbrauch der Ladestrom der Lichtmaschine bei jeder Zugmaschine begrenzt ist.

Um den angezielten Durchschnittsverbrauch des Herstellers zu erreichen, gehen die Lichtmaschinen in den Leerlauf und produzieren keinen Strom, so dass die Batterien auch nach 400 km nur zur Hälfte geladen sind.

Eine vollgeladene Batterie ist aber enorm wichtig, um gerade im Standverhalten der Zugmaschine eine umfängliche Bedienung aller Geräte zu gewährleisten.

Alle modernen Zugmaschinen haben eine elektrische Standklimaanlage, einen Kühlschrank und weitere elektrische Geräte. Die Standklimaanlage und weitere elektrische Verbraucher, die im Stand betrieben werden müssen, gehen zu Lasten der Bordbatterie der Zugmaschine. Mittlerweile haben die Zugmaschinen eine Verbraucherabschaltung, um zu gewährleisten, dass die Zugmaschine nach der Pause wieder startet.

Demzufolge hat der Fahrer während seiner Pause in der Zugmaschine keinen Strom, was die Lebensqualität und die Ruhephasen belastet.

Lösungen wurden dadurch gefunden, dass der Fahrer die Zugmaschine im Stand laufen gelassen hat, was aus Sicht der CO2-Bilanz des Betreibers der Zugmaschinen angerechnet wird und somit einen wesentlichen Nachteil darstellt. Auch ist es hier wichtig zu erwähnen, dass der unnötige Standverbrauch unmittelbar in die Rechnung des neuen Energieeffizienzgesetzes einfließt und damit den Flottenverbrauch unnötig nach oben treibt.

Aufgabe der Erfindung ist es, diesen Nachteil zu beheben und eine Schaltungsanordnung zwischen einem Kühl-Koffer-Auflieger und der dazugehörigen Zugmaschine zu realisieren, wobei die Batterie der Zugmaschine aufgeladen wird.

Die Aufgabe wird dadurch gelöst, dass eine Schaltungsanordnung zwischen einem Kühl-Koffer-Auflieger und der dazugehörigen Zugmaschine zum Laden der Batterie der Zugmaschine gegeben ist, welche im Patentanspruch 1 realisiert ist.

Schaltungsanordnung zwischen einem Kühl-Koffer-Auflieger und der dazugehörigen Zugmaschine zum Laden der Batterie der Zugmaschine, wobei ein Lade-Charger mit einer Vorrangschaltung zwischen einer Batterie und dem Kühlaggregat des Kühl-Koffer-Aufliegers angeschlossen ist und ein Nato-Strom-Versorgungskabel mit 12 V vom Lade-Charger hin zur Starthilfebox der Zugmaschine mit einer Vorrangschaltung verbunden ist.

Folgende Anwendungslösung ist gegeben.

An unserem Kühl-Koffer-Auflieger befindet sich ein Kühlaggregat, welches eine Temperatureinstellung von - 30 bis + 30 Grad hat, welches selbständig über einen Dieselmotor oder über eine externe Stromzufuhr betrieben werden kann.

Dementsprechend wird ein handelsüblicher Lade-Charger, welcher auch zum Bedienen einer entsprechenden Ladebordwand genutzt wird, nachgerüstet bzw. verwendet. Dabei wird ein Lade-Charger des installierten Kühlaggregates, also des Herstellers, verwendet.

Da das motorbetriebene Kühlaggregat einen Drehstromgenerator hat, der dauerhaft Strom produziert, greifen wir diesen über den Lade-Charger ab, leiten diesen über ein handelsübliches Nato-Strom-Versorgungskabel direkt in die Starthilfebox der Zugmaschine. Über diese Notanschlussstelle verfügt z.B. jede Zugmaschine oder jeder Transporter. Von dort aus geht es direkt auf die Batterie der Zugmaschine.

Wir nutzen somit über eine Vorrangschaltung die permanent produzierte elektrische Energie des Kühlaggregates durch Diesel oder externen Strom im Dauerbetrieb oder Start-Stopp für das zusätzliche elektrische Laden der Batterien der Zugmaschine

Das geschieht sowohl während der Fahrt als auch im Stand, solange wie die Zugmaschine mit dem Auflieger verbunden ist.

Die Vorrangschaltung im Lade-Charger sowie in der Notstrombox sorgt dafür, dass es keinen Rückstrom in die jeweiligen Bauteile gibt.

Folgende Vorteile aus der erfinderischen Lösung sind gegeben.

Die Arbeitsbedingungen der jeweiligen Fahrer der Zugmaschine verbessern sich erheblich, weil sie immer volle Batterien zum Betreiben der elektrischen Geräte besitzen. Geräusch und Umweltbelastung werden erheblich reduziert. NOX-Sensoren werden geschont und der Partikelfilter läuft im Stand nicht voll.

Dies ist enorm wichtig im Sommer zum Betreiben der Standklimaanlage und im Winter zum Betreiben der Standheizung. Sie müssen bedenken, die Fahrer sind 24 Stunden täglich im LKW bei Außentemperaturen zwischen + 35 und - 15 Grad in Europa. In anderen Ländern ist es extremer.

Für den Betreiber der Zugmaschine entsteht kein zusätzlicher Standdieselverbrauch mehr.

Weiterhin wird der CO2-Ausstoß gemindert und die Umweltbelastung durch Laufen lassen des Motors der Zugmaschine auf 0 gebracht. Hier ist auch die STVO zu beachten die den Motorlauf im Stand zeitlich begrenzt und bei Nichtbeachtung sanktioniert mit Strafen.

Aufgrund des ständigen Ladeprozesses ist der Pflegezustand der jeweiligen Batterie der Zugmaschine optimal.

Außerdem werden die gegebenen Normen der Arbeitsschutzbestimmungen für Fahrer von Zugmaschinen, insbesondere mit Kühl-Koffer-Aufliegern, eingehalten.

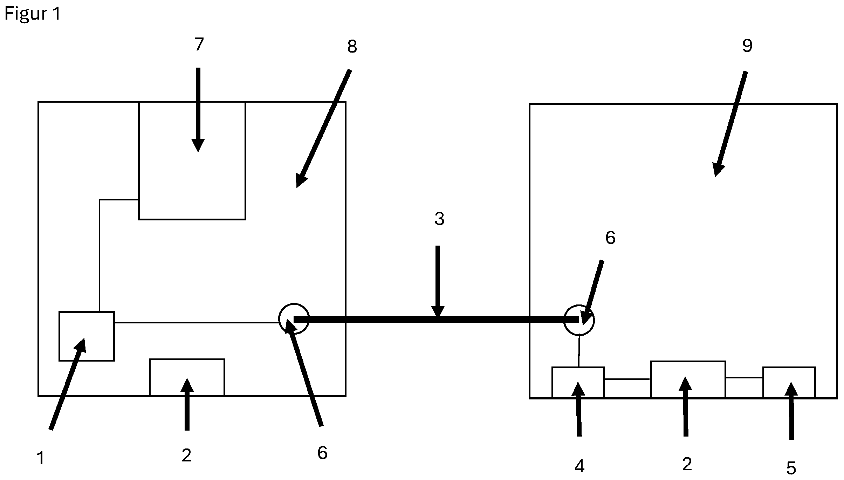

In der Figur 1 ist eine schematische Darstellung der Schaltungsanordnung zwischen dem Kühl-Koffer-Auflieger 8 und der Zugmaschine 9 ausgeführt.

Dabei ist ein Kühl-Koffer-Auflieger 8 mit entsprechendem Kühler 7 zum Kühlen und Beheizen der beinhalteten Waren gegeben.

Des Weiteren ist dazugehörig eine Zugmaschine 9 dargestellt.

Außerdem ist ein Nato-Verbindungskabel 3 für 12 V als Verbindung zwischen Kühl-Koffer-Auflieger 8 und der Zugmaschine 9 dargestellt, wobei jeweils Nato-Kabel-Dosen 6 an dem Kühl-Koffer-Auflieger 8 und der Zugmaschine 9 angeordnet sind.

Dabei ist an dem Kühl-Koffer-Auflieger 8 eine Verbindung zwischen einem Lade-Charger 1 und dem Kühler 7 gegeben, wobei von dem Lade-Charger 1 eine Verbindung zum LKW-Anschluss 2 vorhanden ist und an diesem LKW-Anschluss 2 eine Nato-Kabel-Dose 6 für das Nato-Verbindungskabel 3 ausgeführt ist.

Auf der LKW-Seit ist eine Nato-Kabel-Dose 6 an der Starthilfebox 4 der Zugmaschine 9 gegeben, wobei eine weitere Verbindung von der Starthilfebox 4 über den LKW-Anschluss 2 hin zu den Batterien 5 vorhanden ist.

Eine weitere technische Lösung ist gegeben, wenn ein allgemeiner Lade-Charger, welcher kompatibel mit allen Kühlaggregaten ist, verwendet wird, um somit die Unabhängigkeit des Einsatzes und Installation des Lade-Chargers zu gewährleisten.

Des Weiteren wird der Anschluss an der Zugmaschine über die Nato-Kabel-Dose so ausgeführt, dass je nach Bauweise der Zugmaschine die jeweilige Batterie geladen wird, was über die Starthilfebox oder einen anderen elektrischen Zugriff auf die Batterie erfolgen kann.

### Bezugszeichen

- 1: Lade-Charger
- 2: LKW-Anschluss
- 3: Nato-Verbindungskabel
- 4: Starthilfebox
- 5: Batterien
- 6: Nato-Kabel-Dose
- 7: Kühler
- 8: Kühl-Koffer-Auflieger
- 9: Zugmaschine

## Patentansprüche

1. Schaltungsanordnung zwischen einem Kühl-Koffer-Auflieger (8) und der dazugehörigen Zugmaschine (9) zum Laden der Batterien (5) der Zugmaschine (9), wobei eine gegebene Verbindung der Elektrik und Druckluft zwischen dem Kühl-Koffer-Auflieger (8) und der Zugmaschine (9) hergestellt ist,
**dadurch gekennzeichnet, dass**
eine zusätzliche Verbindung zwischen dem Kühl-Koffer-Auflieger (8) und der Zugmaschine (9) installiert wird, wobei ein Lade-Charger (1) mit einer integrierten Vorrangschaltung hin zum Kühler (7) zwischen der Batterie und dem Kühler (7) des Kühl-Koffer-Aufliegers (8) installiert ist und eine Verbindung vom Lade-Charger (1) zur Zugmaschine (9) ausgeführt ist, wobei die Verbindung zum Laden der Batterien (5) der Zugmaschine (9) gegeben ist.

## Geänderte Patentansprüche

### Geänderte Patentansprüche gemäss Regel 137(2) EPÜ.

1. Schaltungsanordnung zum Laden mindestens einer Batterie (5) einer Zugmaschine (9) durch einen mit der Zugmaschine (9) gekuppelten Kühl-Koffer-Auflieger (8), wobei der Kühl-Koffer-Auflieger (8) ein eigenständig betriebenes Kühlaggregat (7) mit einer elektrischen Energiezufuhr aufweist,
**dadurch gekennzeichnet, dass**
die Schaltungsanordnung vollständig auf dem Kühl-Koffer-Auflieger (8) angeordnet ist und die Schaltungsanordnung einen Lade-Charger (1) umfasst, der elektrisch an den Generator oder einer externen Stromzufuhr des Kühlaggregates (7) angeschlossen ist und aus dessen Energiezufuhr eine geregelte Gleichspannung zum Laden der Batterie (5) der Zugmaschine (9) erzeugt, wobei der Lade-Charger (1) eine integrierte Vorrang- und Rückstromsperrschaltung aufweist, die einen Rückstrom von der Batterie (5) der Zugmaschine (9) in den Kühl-Koffer-Auflieger (8) verhindert und sicherstellt, dass die elektrische Versorgung des Kühlaggregates (7) gegenüber der Ladefunktion der Batterie (5) der Zugmaschine (9) priorisiert ist, und wobei der Lade-Charger (1) über einen elektrischen Zugriff der Zugmaschine (9) verbunden ist, sodass die Batterie (5) der Zugmaschine (9) sowohl während der Fahrt als auch im Stand geladen wird, solange der Kühl-Koffer-Auflieger (8) mit der Zugmaschine (9) gekoppelt ist.
